# EUROPEAN PATENT APPLICATION

(11) **EP 3 783 906 A1**
(43) Date of publication of application: **24.02.2021**
(21) Application number: 18921207.9
(22) Date of filing: 29.05.2018
(51) Int. Cl.: H04N 21/81, H04N 21/485, H04N 21/442, H04N 21/443, H04N 21/414

(54) **METHOD AND DEVICE FOR SELECTING AUDIO TRACK FROM AUDIO AND VIDEO FILES**

(71) Applicant: HUAWEI TECHNOLOGIES CO., LTD., Shenzhen, Guangdong 518129 (CN)
(72) Inventor: YU, Yanhui, Shenzhen, Guangdong 518129 (CN); LI, Xin, Shenzhen, Guangdong 518129 (CN)
(74) Representative: MERH-IP Matias Erny Reichl Hoffmann Patentanwälte PartG mbB
(86) International application number: PCT/CN2018/088857
(87) International publication number: WO 2019/227308

(57) **Abstract**

Embodiments of this application provide a method for selecting an audio track from an audio and video file. The method includes: selecting, by a terminal, one or more audio tracks that support decoding from one or more audio tracks of the audio and video file; selecting, by the terminal, an audio track matching a language from the one or more audio tracks that support decoding; selecting, by the terminal, an audio track whose supported audio format is an audio format with a first specification from a plurality of audio tracks matching the language; selecting, by the terminal, an audio track having a first bit rate from the audio track whose supported audio format is the audio format with the first specification; and playing, by the terminal, the audio and video file based on the selected audio track. The first specification of the supported audio format is higher than a second specification of the supported audio format. The first bit rate of the audio track having the first bit rate is higher than a second bit rate of an audio track having the second bit rate.

## Description

### TECHNICAL FIELD

Embodiments of this application relate to the field of audio and video technologies related to a terminal device, and in particular, to a method and an apparatus for selecting an audio track from an audio and video file on the terminal device.

### BACKGROUND

Smartphones have developed rapidly in recent years. With an increase in a screen size and an enhancement of an audio effect, it is increasingly common for people to watch videos such as a movie and television by using an audio and video playing application on a mobile phone.

A video resource includes video data and audio data. The audio data may be single-audio track data or multi-audio track data. An audio track is a track for recording the audio data. Each audio track has one or more attribute parameters. The attribute parameters include an audio format, a bit rate, a dubbing language, a sound effect, a quantity of channels, volume, and the like. When the audio data is multi-audio track data, two different audio tracks have at least one different attribute parameter, or at least one attribute parameter of the two different audio tracks has a different value.

When a user uses a specialized playing application to play a video with multiple audio tracks on the mobile phone, the playing application may display an audio track option on a screen. The user may select an appropriate audio track to play the video based on the audio track option. However, most common playing applications do not have such a function. Consequently, when the user watches the video with multiple audio tracks, an actually played audio track does not match an audio track that the user wants to play. Especially when there is a plurality of audio tracks of different languages, accuracy of audio track selection is significant.

### SUMMARY

Embodiments of this application provide a method and an apparatus for selecting an audio track from an audio and video file, so that a terminal can automatically select an audio track meeting a user requirement when playing a multi-audio track video.

According to an aspect, an embodiment of the present invention provides a method for selecting an audio track from an audio and video file.

In a possible design, the terminal selects one or more audio tracks that support decoding from one or more audio tracks of the audio and video file; the terminal selects one or more audio tracks matching a language from the one or more audio tracks that support decoding; the terminal selects one or more audio tracks whose supported audio format is an audio format with a first specification from the one or more audio tracks matching the language; the terminal selects an audio track having a first bit rate from the one or more audio tracks whose supported audio format is the audio format with the first specification; and the terminal plays the audio and video file based on the selected audio track. The first specification of the supported audio format is higher than a second specification of the supported audio format. The first bit rate of the audio track having the first bit rate is higher than a second bit rate of an audio track having the second bit rate. The second specification refers to Dolby surround audio encoding AC-3. The second bit rate is 448 kilobytes per second.

In a possible design, a decoding format of the one or more audio tracks is compared with a preset decoding set. If the decoding format of the one or more audio tracks is in the preset decoding set, it is considered that the one or more audio tracks have one or more audio tracks that support decoding. That the terminal selects one or more audio tracks that support decoding from one or more audio tracks of the audio and video file includes: The terminal selects the one or more audio tracks whose decoding format is in the preset decoding set from the one or more audio tracks of the audio and video file.

In a possible design, that the terminal selects one or more audio tracks matching a language from the one or more audio tracks that support decoding includes: The terminal determines a first language evaluation result based on one or more of a system language, an input method setting, voice assistant input, and a historical movie watching habit; and the terminal selects, based on the first language evaluation result, the one or more audio tracks matching the language from the one or more audio tracks that support decoding.

In a possible design, that the terminal selects one or more audio tracks whose supported audio format is an audio format with a first specification from the one or more audio tracks matching the language includes: The terminal selects, from the one or more audio tracks matching the language, one or more audio tracks whose supported audio format is an audio format with a sampling rate higher than the second specification.

In a possible design, that the terminal selects an audio track having a first bit rate from the one or more audio tracks whose supported audio format is the audio format with the first specification includes: The terminal determines a second language evaluation result based on one or more of an audio format and a bit rate.

In a possible design, the terminal determines a language of the played audio track based on the first language evaluation result and the second language evaluation result.

According to another aspect, an embodiment of the present invention provides a terminal device, including a display, an audio play or output element, one or more processors, a memory, a plurality of application programs, and one or more computer programs. The one or more computer programs are stored in the memory. The one or more computer programs include an instruction. When the instruction is executed by the terminal device, the terminal device is enabled to perform the following steps.

The terminal selects one or more audio tracks that support decoding from one or more audio tracks of an audio and video file; selects one or more audio tracks matching a language from the one or more audio tracks that support decoding; selects one or more audio tracks whose supported audio format is an audio format with a first specification from the one or more audio tracks matching the language; selects an audio track having a first bit rate from the one or more audio tracks whose supported audio format is the audio format with the first specification; and plays the audio and video file based on the selected audio track. The audio and video file is output by the display and the audio play or output element. The first specification of the supported audio format is higher than a second specification of the supported audio format. The first bit rate of the audio track having the first bit rate is higher than a second bit rate of an audio track having the second bit rate. The second specification refers to Dolby surround audio encoding AC-3. The second bit rate is 448 kilobytes per second.

In a possible design, a decoding format of the one or more audio tracks is compared with a preset decoding set. If the decoding format of the one or more audio tracks is in the preset decoding set, it is considered that the one or more audio tracks have one or more audio tracks that support decoding. That the terminal selects one or more audio tracks that support decoding from one or more audio tracks of an audio and video file includes: The terminal selects the one or more audio tracks whose decoding format is in the preset decoding set from the one or more audio tracks of the audio and video file.

In a possible design, that the terminal selects one or more audio tracks matching a language from the one or more audio tracks that support decoding includes: The terminal determines a first language evaluation result based on one or more of a system language, an input method setting, voice assistant input, and a historical movie watching habit; and the terminal selects, based on the first language evaluation result, the one or more audio tracks matching the language from the one or more audio tracks that support decoding.

In a possible design, that the terminal selects one or more audio tracks whose supported audio format is an audio format with a first specification from the one or more audio tracks matching the language includes: The terminal selects, from the one or more audio tracks matching the language, one or more audio tracks whose supported audio format is an audio format with a sampling rate higher than the second specification.

In a possible design, that the terminal selects an audio track having a first bit rate from the one or more audio tracks whose supported audio format is the audio format with the first specification includes: The terminal determines a second language evaluation result based on one or more of an audio format and a bit rate.

In a possible design, the terminal determines a language of the played audio track based on the first language evaluation result and the second language evaluation result. In a possible design, the one or more computer programs include an instruction, and when the instruction is executed by the electronic device, the electronic device is enabled to perform the following step: determining, by the terminal, a first language evaluation result based on one or more of a system language, an input method setting, voice assistant input, and a historical movie watching habit.

In a possible design, the one or more computer programs include an instruction, and when the instruction is executed by the electronic device, the electronic device is enabled to perform the following step: determining, by the terminal, a second language evaluation result based on one or more of an audio format and a bit rate.

In a possible design, the one or more computer programs include an instruction, and when the instruction is executed by the electronic device, the electronic device is enabled to perform the following step: determining a language of the played audio track based on the first language evaluation result and the second language evaluation result.

According to another aspect, an embodiment of the present invention provides a computer program product. When the computer program product runs on a terminal, the terminal is enabled to perform the method according to any one of the foregoing aspects.

According to still another aspect, an embodiment of the present invention provides a computer-readable storage medium, including an instruction. When the instruction is run on a terminal, the terminal is enabled to perform the method according to any one of the foregoing aspects.

Compared with the prior art, with the solutions provided in the present invention, when a playing application does not have an audio track selection function, a terminal installed with the playing application can automatically select an audio track that meets a user requirement.

### BRIEF DESCRIPTION OF DRAWINGS

FIG. 1 is a schematic diagram of setting a language and an input method in an Android system according to an embodiment of the present invention;
FIG. 2 is an architectural diagram of an Android system according to an embodiment of the present invention;
FIG. 3 is a schematic structural diagram 1 of a terminal according to an embodiment of the present invention;
FIG. 4 is a schematic structural diagram of a processor according to an embodiment of the present invention; and
FIG. 5 is a schematic structural diagram 2 of a terminal according to an embodiment of the present invention.

### DESCRIPTION OF EMBODIMENTS

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more of the features. In the descriptions of the embodiments of this application, unless otherwise stated, "a plurality of' means two or more than two.

Various features and functions of the disclosed system and method are described in detail below with reference to the accompanying drawings. In the accompanying drawings, a same symbol identifies a same component unless otherwise stated in a context. It is easy to understand that some aspects of the disclosed system and method may be arranged and combined based on a plurality of different configurations. All of these are considered in this specification.

A method for selecting an audio track provided in the embodiments of this application may be applied to a terminal. The terminal may be any terminal having a display function, such as a mobile phone, a tablet computer, a wearable device, a vehicle-mounted device, an augmented reality (augmented reality, AR)/virtual reality (virtual reality, VR) device, a notebook computer, and an ultra-mobile personal computer (ultra-mobile personal computer, UMPC), or a personal digital assistant (personal digital assistant, PDA). This is not limited in the embodiments of this application.

Generally, the terminal has one or more pieces of application software for playing an audio and video. The playing application software may be pre-installed on the terminal before delivery, or may be subsequently installed on the terminal. The terminal may play an audio and video file by using the playing application. To be specific, a user may watch a movie, television, or another audio and video program by using the terminal.

An audio track is a track for recording audio data. Each audio track has one or more attribute parameters. The attribute parameters include an audio format, a bit rate, a language, a sound effect, a quantity of channels, volume, and the like. When the audio data is multi-audio track data, two different audio tracks have at least one different attribute parameter, or at least one attribute parameter of the two different audio tracks has a different value. The language herein may be a dubbing language.

The played audio and video file may be stored on the terminal or downloaded instantly from a network. Playing an audio or video file that is downloaded instantly refers to online playing, and playing an audio or video file stored on the terminal refers to local playing. If a played audio and video is online, the network side needs to notify the terminal whether the audio and video has multiple audio tracks. Specifically, the network side may notify, by using a notification message, the terminal that the audio and video has multiple audio tracks. After selecting a specific audio track, the terminal needs to notify the network side of the selection. Specifically, the terminal may notify, by using a notification message, a network-side terminal that the specific audio track has been selected. For local playing, the terminal does not need to interact with the network side, and may select a specific local audio track to play. A format of the notification message is not limited in the embodiments of the present invention. For example, the network side notifies, by using a specific notification message, the terminal that the audio and video file has multiple audio tracks. Alternatively, the network side may notify, by using file header information in the audio and video file, the terminal that the audio and video file has multiple audio tracks.

A playing application is required to play an audio and video. Methods for using the playing application are different. For example, the user opens the application, and selects a to-be-played program from an album (album) in the application. When a video stored in the album is played for the first time, a default setting of the playing application may be used.

According to the method provided in the embodiments of the present invention, the terminal selects an audio track from a plurality of audio tracks of the audio and video file for playing. Selecting the audio track of the audio and video includes the following rules:
select, from the audio tracks, an audio track that may be decoded by the terminal;
select an audio track matching a language from the audio tracks;
select an audio track supporting a high-specification audio format (for example, a specification of a DTS (Digital Theater Systems, Digital Theater Systems) audio format is higher than a specification of an AC-3 (Dolby Surround Audio Coding-3, Dolby AC-3) audio format); and
select a high-bit-rate audio track.

For the foregoing audio track selection rules, a sequence of the selections is not limited, and any selection may be first performed.

For example, the following sequence may be used: An audio track that may be decoded by the terminal is selected from all the audio tracks of the audio and video file. Then, an audio track matching a language is selected from a plurality of audio tracks that may be decoded by the terminal. Further, an audio track supporting a high-specification audio format is selected from a plurality of audio tracks matching the language. Finally, a high-bit-rate audio track is selected from a plurality of audio tracks supporting the high-specification audio format.

The following rules are used to select an audio track language: (1) The audio track language is the same as a language used by the user for using a mobile phone; or (2) the audio track language is consistent with a language of a video watched by the user. For the watched video, different scenarios may further be considered. For example, if the video watched by the user includes a video whose original version is a first language (for example, Chinese) and a video whose original version is a second language (for example, English), the audio track language needs to be determined based on a feature of a video that the user currently wants to watch. For example, if the user currently wants to watch a video whose original version is Chinese, and the user once watched a video whose original version is Chinese, Chinese is selected as the audio track language based on the video watched by the user.

Generally, an audio format supported by the terminal is selected. If the terminal supports a plurality of audio formats, an audio track with a high-specification audio format is selected. An audio track specification includes the following: a lossless audio format, an audio format with small lossy compression loss, and an audio format with large lossy compression loss. The audio track specifications are sorted in descending order as follows: the lossless audio format > the audio format with small lossy compression loss > the audio format with large lossy compression loss. For example, there is a DTS decoded audio format, a Dolby decoded audio format, and a common audio format. The audio track specifications are sorted in descending order as follows: the DTS decoded audio format > a Dolby AC-3 decoded audio format > a common audio format with large lossy compression loss.

Generally, a highest bit rate is selected. However, whether the highest bit rate is selected depends on hardware or software of the terminal. If the hardware or the software of the terminal does not support the highest bit rate, a second highest bit rate may be selected. If the hardware or the software of the terminal does not support the second highest bit rate, a lower bit rate may be selected, and so on.

In addition to the foregoing factor, the audio track may be determined based on another factor. For example:

A sound effect: which may be selected based on a historical movie watching habit of the user or a setting of a built-in sound effect of the terminal. That the sound effect is selected based on the historical movie watching habit is: A sound effect which was used most may be recorded, and if there is such a sound effect, the sound effect which was used most is selected. The historical movie watching habit may be a movie watching habit of the user in a same movie watching application. The historical movie watching habit may also be a movie watching habit of the user in all different movie watching applications. The user herein refers to a user using different user accounts, or different users corresponding to different terminals. That the terminal selects the sound effect based on the setting of the built-in sound effect may be: Some terminals have a built-in sound effect, for example, a Dolby sound effect. The Dolby sound effect has settings such as music and cinema. If there is a matched sound effect, the matched sound effect may be selected.

A quantity of sound channels: A maximum quantity of sound channels may be selected based on a quantity of sound channels supported by the terminal.

Volume: A setting of current media volume of the mobile phone may be selected.

When an audio and video file needs to be played, the terminal selects an appropriate audio track from the audio and video file to play a video in the audio and video file. An algorithm in this embodiment of the present invention is used to select the appropriate audio track.

The terminal may select an audio track with a matched language based on the following several language parameters. For example, a language determining result is obtained based on a system language setting, an input method setting, voice assistant input, and the historical movie watching habit of the user.

In addition, the terminal may determine a language for playing based on an audio format and a bit rate. The audio format and the bit rate are determined based on a system underlying software and hardware.

Finally, the terminal obtains, based on the foregoing two parts, a final rule for selecting the playing language for the audio track: An audio track that does not support decoding is excluded. Then, an audio track matching the language is selected from a plurality of audio tracks. Further, an audio track supporting a high-specification audio format (for example, in this embodiment, a specification of the DTS audio format is higher than a specification of the AC-3 audio format) is selected from a plurality of audio tracks matching the language. Finally, an audio track having a high bit rate is selected from a plurality of audio tracks supporting the high-specification audio format.

The algorithm may be applied to a plurality of operating systems, including an Android® operating system, an iOS® operating system of Apple, and another operating system. The following uses the Android® operating system as an example to describe how the algorithm works.

Audio track selection may be performed by an application framework (application framework) layer of the Android® operating system (referred to as Android below) by using the algorithm. Specifically, the application framework layer receives and stores a plurality of audio tracks. The application framework layer selects a specific audio track for use, and sends the selected specific audio track to an application layer for playing.

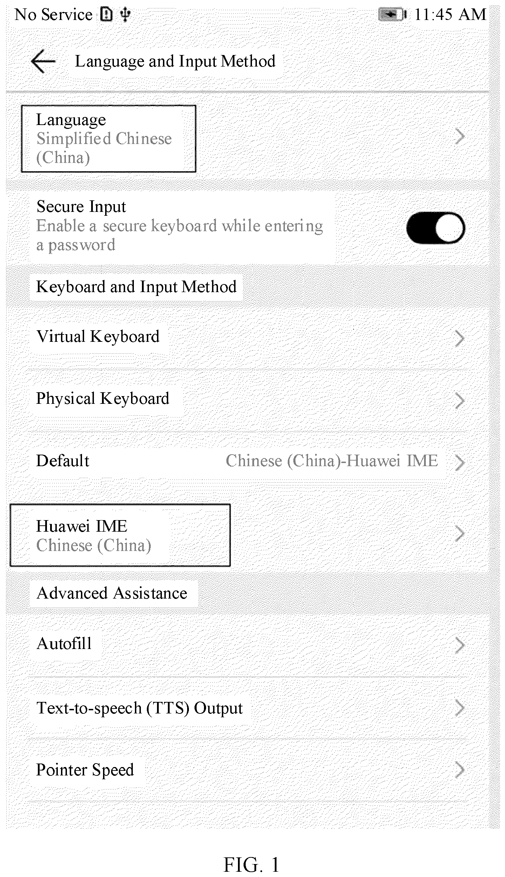

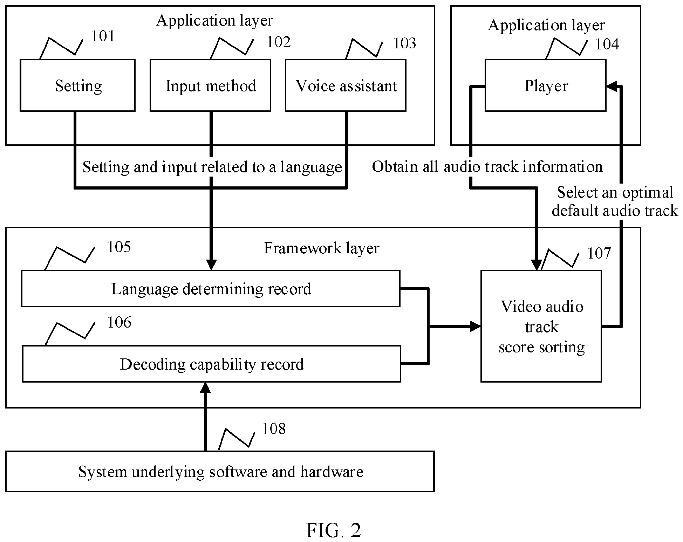

A terminal software system developed based on the algorithm may specifically include two recording modules. For example, as shown in FIG. 2, an Android framework layer of the terminal may include two recording modules: a recording module 105 of language determining and a recording module 106 of decoding capability. The recording module of language determining performs input determining based on at least three parameters of the application layer. The at least three parameters include a language of a system language setting 101, a language of a user input method 102, and a language input by the user by using a voice assistant 103. The system language setting 101 includes a language option in a terminal setting. The input method setting 102 includes a setting of an input method application. For example, in language and input method settings of an Android system shown in FIG. 1, a top box "language" is the system language setting, and a bottom box "Huawei IME" is the input method setting. The voice assistant input refers to input by interacting with a terminal language. The historical movie watching habit refers to a previous movie watching habit of the user in this movie watching. The historical movie watching habit may be a movie watching habit of the user in a same playing application. The historical movie watching habit may also be a movie watching habit of the user in all different playing applications. The user herein refers to a user that uses the playing application and that is differentiated based on a user account, or different users corresponding to different terminals. A user language determining result is a language determining result obtained based on the system language setting, the input method setting, the voice assistant input, and the historical movie watching habit of the user, or may be a language that should be used by the selected audio track.

Specifically, the recording module of language determining performs input determining based on the at least three parameters of the application layer. The at least three parameters include a language of a user setting 101, the language of the user input method 102, and the language input by the user by using the voice assistant 103. For a specific determining process, refer to the following Table 1.

**Table 1**

| User | System language setting | Input method setting | Voice assistant input | Historical movie watching habit | Language determining result |
|---|---|---|---|---|---|
| 1 | Chinese | Chinese | Chinese | Chinese | Chinese |
| 2 | English | Chinese | English | English | English |
| 3 | English | English | Chinese | English | English |
| 4 | Chinese | English | Chinese | English | English |

Table 1 further includes the historical movie watching habit of the user. The recording module of language determining at the framework layer obtains the language determining result based on various cases of the parameters in the middle four columns of the table. A user 1 is used as an example. A language of the system language setting is Chinese. A language of the input method setting is Chinese. A language of the voice assistant input is Chinese. A language of the historical movie watching habit is also Chinese. Therefore, the language determining result is Chinese. A user 4 is used as an example. A language of the system language setting is Chinese. A language of the input method setting is English. A language of the voice assistant input is Chinese. A language of the historical movie watching habit is English. When there is no language with an obvious advantage in the middle four columns of parameters, the language determining result is English based on the historical movie watching habit of the user.

In addition, the application framework (application framework) layer of the Android system further includes the recording module 106 of decoding capability. The recording module 106 of decoding capability is determined based on a system underlying software and hardware 108. For details, refer to the following table:

**Table 2**

| Audio track sequence number | Audio format | Bit rate | Language |
|---|---|---|---|
| 1 | DTS | 1509 kbps | English |
| 2 | DTS | 1509 kbps | Chinese |
| 3 | DTS | 754 kbps | Chinese |
| 4 | AC-3 | 448 kbps | English |
| 5 | AC-3 | 448 kbps | Chinese |

In the table, the audio format indicates a decoding capability, and the bit rate indicates an audio track effect. For example, the framework layer obtains all audio track information from a player at the application layer. In the table, for an audio track with a sequence number 1, an audio format is DTS (Digital Theater Systems, Digital Theater Systems), a bit rate is 1509 kbps (kilobytes per second), and a language is English. For example, a difference between an audio track with a sequence number 2 and the audio track with the sequence number 1 is that a language of the audio track with the sequence number 2 is Chinese. For example, for an audio track with a sequence number 4, an audio format is AC-3 (Dolby Surround Audio Coding-3, Dolby AC-3), a bit rate is 448 kbps, and a language is English.

In the table, the language for playing is determined based on the audio format and the bit rate.

Then, with reference to a language determining record and a decoding capability record in Table 1 and Table 2, audio track score sorting of the video is obtained, as shown in the following table.

**Table 3**

| Default audio track sequence number | User 1 | User 2 | User 3 | User 4 |
|---|---|---|---|---|
| DTS decoding is supported | 2 | 1 | 1 | 1 |
| DTS decoding is not supported | 5 | 4 | 4 | 4 |

For example, for the user 1, if the DTS decoding is supported, the second entry in Table 2 is selected. For the user 1, if the DTS decoding is not supported, the fifth entry in Table 2 is selected. The audio track score sorting of the video includes the following rules: First, an audio track that does not support decoding is excluded. Then, an audio track matching a language is selected from a plurality of audio tracks. Further, an audio track supporting a high-specification audio format (for example, in this embodiment, the specification of the DTS audio format is higher than the specification of the AC-3 audio format) is selected from a plurality of audio tracks matching the language. Finally, an audio track having a high bit rate is selected from a plurality of audio tracks supporting the high-specification audio format.

Different users herein may correspond to different terminals, or may correspond to different accounts on a same terminal. When the different users correspond to the different accounts on a same terminal, the different accounts are used as independent users to separately maintain a plurality of modules for recording a language determining record, a decoding capability record, and the audio track score sorting of the video.

It should be noted that, a video audio track score sorting module 107 at the framework layer obtains all the audio track information in the video and audio file from a player 104 at the application layer, and after the video audio track score sorting module 107 sorts the audio track information, an optimal default audio track is obtained and returned to the player 104 at the application layer for playing. A process of selecting the optimal default audio track is the same as a function implemented by the video audio track score sorting module. Details are not described herein again.

In addition to the foregoing content in this embodiment of the present invention, this embodiment of the present invention further includes the following solutions:

After the selecting is completed, the terminal may prompt the user by displaying, on a display screen of the terminal, that the video has a plurality of audio tracks and the terminal has automatically selected an XX audio track. XX indicates an audio track sequence number.

Alternatively, the algorithm described in this embodiment of the present invention may be applied to a scenario that the user may make a choice. The terminal may first automatically select an audio track and then prompt the user that the video has a plurality of audio tracks and the terminal has automatically selected an XX audio track. If the user is not satisfied with the selected audio track, the user may manually select an audio track.

In this way, the player at the application layer does not need to make any modification, but only needs to send the audio tracks in the audio and video file to the framework layer for analysis, to obtain an appropriate audio track for the user, and send the audio track to the player at the application layer for playing. This can implement automatic selection of an audio track independent of the player, and enhance user experience.

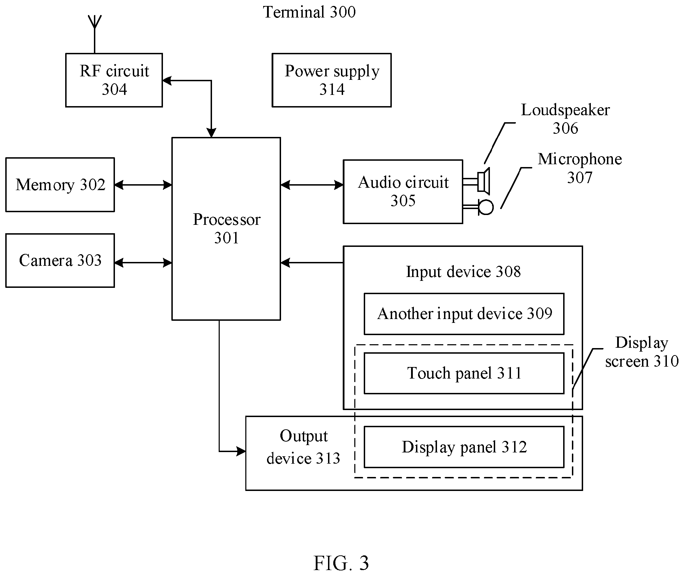

FIG. 3 is a schematic structural diagram of a terminal according to an embodiment of the present invention. The terminal 300 includes components such as a processor 301, a memory 302, a camera 303, an RF circuit 304, an audio circuit 305, a loudspeaker 306, a microphone 307, an input device 308, another input device 309, a display screen 310, a touch panel 311, a display panel 312, an output device 313, and a power supply 314. The display screen 310 includes at least the touch panel 311 serving as an input device and the display panel 312 serving as an output device. It should be noted that a structure of the terminal shown in FIG. 3 constitutes no limitation on the terminal, and the terminal may include more or fewer components than those shown in the figure, or combine some components, or split some components, or have different component arrangements. This is not limited herein.

The following describes each composition part of the terminal 300 in detail with reference to FIG. 3.

The radio frequency (radio frequency, RF) circuit 304 may be configured to send and/or receive information or receive and send a signal during a call. For example, if the terminal 300 is a vehicle-mounted device, the terminal 300 may send, by using the RF circuit 304 after receiving downlink information sent by a base station, the downlink information to the processor 301 for processing, and send related uplink data to the base station. Generally, an RF circuit includes but is not limited to an antenna, at least one amplifier, a transceiver, a coupler, a low noise amplifier (low noise amplifier, LNA), a duplexer, and the like. In addition, the RF circuit 304 may further communicate with a network and another device through wireless communication. The wireless communication may use any communications standard or protocol, including but not limited to a global system for mobile communications (global system for mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short messaging service (short messaging service, SMS), and the like.

The memory 302 may be configured to store a software program and a module. The processor 301 runs the software program and the module that are stored in the memory 302, to perform various function applications of the terminal 300 and data processing. The memory 302 may mainly include a program storage area and a data storage area. The program storage area may store an operating system, an application required by at least one function (such as a sound playing function or an image playing function), and the like. The data storage area may store data (such as audio data or video data) created based on use of the terminal 300, and the like. In addition, the memory 302 may include a high-speed random access memory, and may further include a non-volatile memory, such as at least one magnetic disk storage device, a flash memory device, or another volatile solid-state storage device.

The another input device 309 may be configured to receive input digit or character information, and generate key signal input related to user setting and function control of the terminal 300. Specifically, the another input device 309 may include but is not limited to one or more of a physical keyboard, a function key (such as a volume control key or an on/off key), a tracking ball, a mouse, a joystick, an optical mouse (the optical mouse is a touch-sensitive surface that does not display visual output, or an extension of a touch-sensitive surface formed by a touchscreen), or the like. The another input device 309 may further include a sensor built in the terminal 300, such as a gravity sensor or an acceleration sensor, and the terminal 300 may further use a parameter detected by the sensor as input data.

The display screen 310 may be configured to display information input by a user or information provided for the user, and various menus of the terminal 300, and may further receive user input. In addition, the display panel 312 may be configured in a form of a liquid crystal display (liquid crystal display, LCD), an organic light-emitting diode (organic light-emitting diode, OLED), or the like. The touch panel 311, also referred to as a touchscreen, a touch-sensitive screen, or the like, may collect a touch or non-touch operation (for example, an operation performed by the user on the touch panel 311 or near the touch panel 311 by using any suitable object or accessory, such as a finger or a stylus; or a motion sensing operation, where the operation includes operation types such as a single-point control operation and a multi-point control operation) performed by the user on or near the touch panel 311, and drive a corresponding connection apparatus based on a preset program. It should be noted that the touch panel 311 may further include two parts: a touch detection apparatus and a touch controller. The touch detection apparatus detects a touch orientation and gesture of the user, detects a signal brought by the touch operation, and sends the signal to the touch controller. The touch controller receives touch information from the touch detection apparatus, converts the touch information into information that can be processed by the processor 301, and then sends the information to the processor 301. In addition, the touch controller may further receive and execute a command sent by the processor 301. In addition, the touch panel 311 may be implemented in a plurality of types, such as a resistive type, a capacitive type, an infrared type, and a surface acoustic wave type, or the touch panel 311 may be implemented by using any technology to be developed in the future. Generally, the touch panel 311 may cover the display panel 312. The user may perform, based on content displayed on the display panel 312 (the displayed content includes but is not limited to a soft keyboard, a virtual mouse, a virtual key, an icon, and the like), an operation on or near the touch panel 311 that covers the display panel 312. After detecting the operation on or near the touch panel 111, the touch panel 311 sends the operation to the processor 301 to determine the user input, and then the processor 301 provides corresponding visual output on the display panel 312 based on the user input. In FIG. 3, the touch panel 311 and the display panel 312 serve as two independent components to implement input and output functions of the terminal 300. However, in some embodiments, the touch panel 311 and the display panel 312 may be integrated to implement the input and output functions of the terminal 300.

The RF circuit 304, the loudspeaker 306, and the microphone 307 may provide an audio interface between the user and the terminal 300. The audio circuit 305 may convert received audio data into a signal, and transmit the signal to the loudspeaker 306, and the loudspeaker 306 converts the signal into a voice signal for output. In addition, the microphone 307 may convert a collected voice signal into a signal. The audio circuit 305 receives the signal, converts the signal into audio data, and then outputs the audio data to the RF circuit 304, to send the audio data to a device such as another terminal, or output the audio data to the memory 302, so that the processor 301 performs further processing with reference to content stored in the memory 302. In addition, the camera 303 may collect an image frame in real time and send the image frame to the processor 301 for processing, and store a processed result in the memory 302 and/or display the processed result to the user by using the display panel 312.

The processor 301 is a control center of the terminal 300, is connected to each part of the entire terminal 300 by using various interfaces and lines, and performs various functions of the terminal 300 and data processing by running or executing the software program and/or the module that are/is stored in the memory 302 and invoking data stored in the memory 302, to perform overall monitoring on the terminal 300. It should be noted that the processor 301 may include one or more processing units. An application processor and a modem processor may be integrated into the processor 301. The application processor mainly processes an operating system, a user interface (user interface, UI), an application, and the like. The modem processor mainly processes wireless communication. It should be understood that the modem processor may not be integrated into the processor 301.

The terminal 300 may further include the power supply 314 (for example, a battery) that supplies power to each component. In this embodiment of the present invention, the power supply 314 may be logically connected to the processor 301 by using a power management system, to manage functions such as charging, discharging, and power consumption by using the power management system.

In addition, a component not shown in FIG. 3 also exists. For example, the terminal 300 may further include a Bluetooth module, a sensor, and the like. Details are not described herein.

The processor 301 on the terminal 300 is configured to select an audio track that supports decoding; select an audio track matching a language; select an audio track supporting a high-specification audio format (for example, a specification of a DTS (Digital Theater Systems, Digital Theater Systems) audio format is higher than a specification of an AC-3 (Dolby Surround Audio Coding-3, Dolby AC-3) audio format); and select a high-bit-rate audio track.

The audio track that supports decoding is an audio track that can be decoded.

For a rule of selecting an audio track for an audio and video, there may be no sequence between each selection, and any one of the selections may be performed first. For example, an audio track that supports decoding is selected from all audio tracks. Then, an audio track matching a language is selected from a plurality of audio tracks that support decoding. Further, an audio track supporting a high-specification audio format (for example, the specification of the DTS (Digital Theater Systems, Digital Theater Systems) audio format is higher than the specification of the AC-3 (Dolby Surround Audio Coding-3, Dolby AC-3) audio format) is selected from a plurality of audio tracks matching the language. Finally, a high-bit-rate audio track is selected from a plurality of audio tracks supporting the high-specification audio format.

For a rule of selecting a language of the audio track, a rule of selecting an audio format, a rule of selecting a bit rate, and another factor, refer to descriptions in the method embodiment in this application. Details are not described herein again.

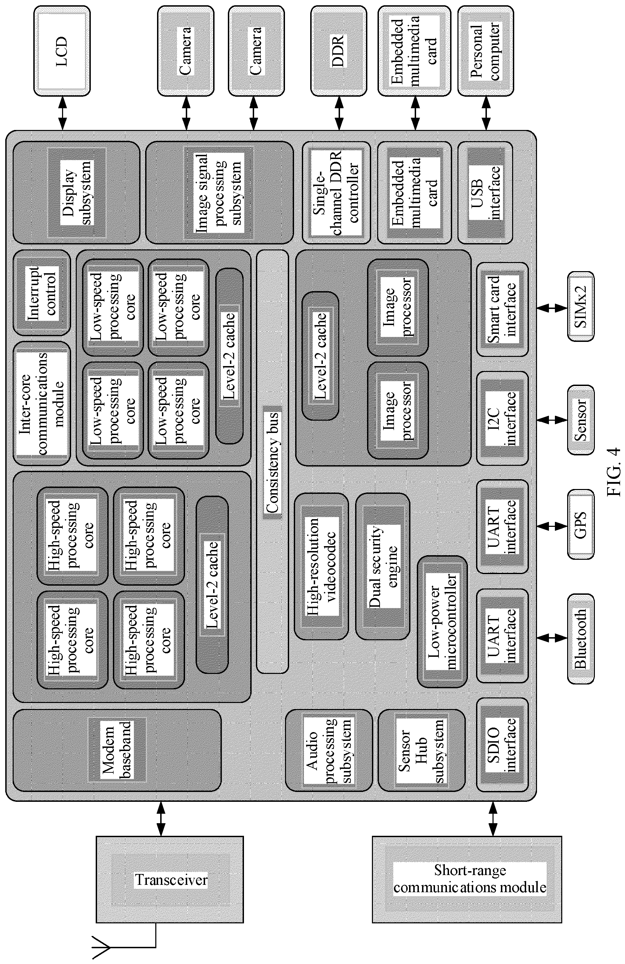

FIG. 4 is a block diagram of internal implementation of a processor. It may be learned from the figure that the processor includes four high-speed processing cores and four low-speed processing cores. Every four high-speed processing cores cooperate with a corresponding level-2 cache to form a high-speed core processing area. Every four low-speed processing cores cooperate with a corresponding level-2 cache to form a low-speed core processing area. The high-speed processing core herein may be a processing core whose processing frequency is 2.1 GHz (Hz). The low-speed processing core herein may be a processing core whose processing frequency is 1.7 GHz (Hz).

All the steps performed by the processor 301 are completed by the high-speed processing core or the low-speed processing core.

In addition to the high-speed processing core, the low-speed processing core, and the corresponding level-2 caches, there is another component, for example, a modem baseband part; a baseband part connected to a radio frequency transceiver, and configured to process a radio frequency signal; a display subsystem connected to a display; an image signal processing subsystem connected to the outside of a CPU; a single-channel DDR controller connected to a DDR memory; an embedded multimedia card interface connected to an embedded multimedia card; a USB interface connected to a PC; a SDIO input/output interface connected to a short-range communications module; a UART interface connected to Bluetooth and GPS; an I2C interface connected to a sensor; a smart card interface connected to a smart card such as a SIM card; a movie processing subsystem, a Sensor Hub subsystem, a low-power microcontroller, a high-resolution video codec, a dual security engine, and an image processing unit including an image processor and a level-2 cache, that are included in the CPU; and a consistency bus arranged inside the CPU. The consistency bus is configured to connect all the interfaces and the processing unit in the CPU.

It may be understood that, to implement the foregoing functions, the terminal and the like include corresponding hardware structures and/or software modules for performing the functions. A person skilled in the art should easily be aware that, in combination with units and algorithm steps of the examples described in the embodiments disclosed in this specification, the embodiments of this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of the embodiments of this application.

In the embodiments of this application, the terminal, or the like may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in the embodiments of this application, module division is an example, and is merely a logical function division. In actual implementation, another division manner may be used.

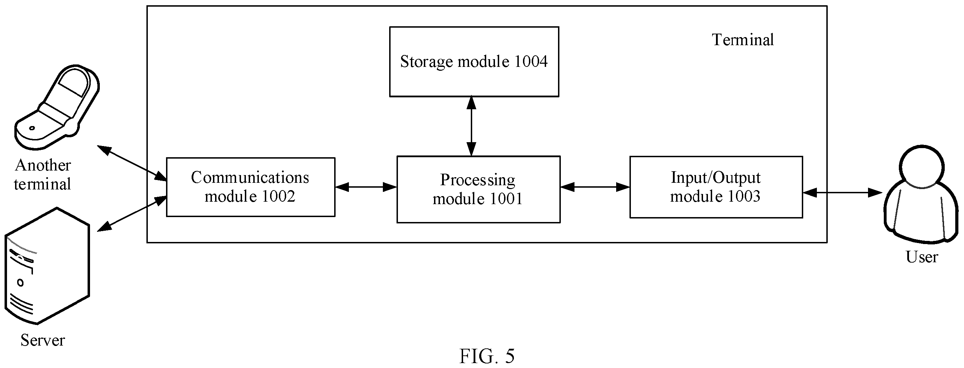

FIG. 5 is a possible schematic structural diagram of the terminal in the foregoing embodiments. The terminal includes a processing module 1001, a communications module 1002, an input/output module 1003, and a storage module 1004.

The processing module 1001 is configured to control and manage an action of the terminal. The communications module 1002 is configured to support the terminal to communicate with another network entity. The input/output module 1003 is configured to receive information input by a user, or output information provided for the user and various menus of the terminal. The storage module 1004 is configured to store program code and data of the terminal.

For example, the processing module 1001 may be a processor or a controller. For example, the processing module 1001 may be a central processing unit (Central Processing Unit, CPU), a GPU, a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logical device, a transistor logical device, a hardware component, or any combination thereof. The processing module 1001 may implement or execute various example logical blocks, modules, and circuits described with reference to content disclosed in this application. Alternatively, the processor may be a combination implementing a computing function, for example, a combination of one or more microprocessors, or a combination of a DSP and a microprocessor, and or the like.

The communications module 1002 may be a transceiver, a transceiver circuit, an input/output device, a communications interface, or the like. For example, the communications module 1002 may be specifically a Bluetooth apparatus, a Wi-Fi apparatus, a peripheral interface, or the like.

The storage module 1004 may be a memory. The memory may include a high-speed random access memory (RAM), a DDR, and may include a nonvolatile memory such as a disk storage device and a flash memory device, or another volatile solid-state storage device.

The input/output module 1003 may be an input/output device such as a touchscreen, a keyboard, a microphone, and a display. The display may be specifically configured in a form such as a liquid crystal display or an organic light emitting diode. In addition, a touchpad may be further integrated into the display, and is configured to collect a touch event on or near the touchpad, and send collected touch information to another component (for example, the processor).

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on the computer, all or some of the procedures or functions are generated according to the embodiments of the present invention. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for selecting an audio track from an audio and video file, comprising:
selecting, by a terminal, one or more audio tracks that support decoding from one or more audio tracks of the audio and video file;
selecting, by the terminal, an audio track matching a language from the one or more audio tracks that support decoding;
selecting, by the terminal, an audio track whose supported audio format is an audio format with a first specification from a plurality of audio tracks matching the language;
selecting, by the terminal, an audio track having a first bit rate from the audio track whose supported audio format is the audio format with the first specification; and
playing, by the terminal, the audio and video file based on the selected audio track, wherein
the first specification of the supported audio format is higher than a second specification of the supported audio format;
the first bit rate of the audio track having the first bit rate is higher than a second bit rate of an audio track having the second bit rate;
the second specification refers to Dolby surround audio encoding AC-3; and
the second bit rate is 448 kilobytes per second.

2. The method according to claim 1, wherein selecting, by the terminal, the audio track matching the language from a plurality of audio tracks that support decoding; and the selecting, by the terminal, an audio track whose supported audio format is an audio format with a first specification comprise: determining, by the terminal, a first language evaluation result based on one or more of a system language, an input method setting, voice assistant input, and a historical movie watching habit.

3. The method according to claim 1, wherein the selecting, by the terminal, an audio track having a first bit rate from the audio track whose supported audio format is the audio format with the first specification comprises: determining, by the terminal, a second language evaluation result based on one or more of an audio format and a bit rate.

4. The method according to claims 2 and 3, further comprising:
determining, by the terminal, a language of the played audio track based on the first language evaluation result and the second language evaluation result.

5. A terminal device, comprising:
a touchscreen, wherein the touchscreen comprises a touch-sensitive surface and a display;
one or more processors;
a memory;
a plurality of application programs; and
one or more computer programs, wherein the one or more computer programs are stored in the memory, the one or more computer programs comprise an instruction, and when the instruction is executed by the terminal device, the terminal device is enabled to perform the following steps:
selecting one or more audio tracks that support decoding from one or more audio tracks of an audio and video file;
selecting an audio track matching a language from the one or more audio tracks that support decoding;
selecting an audio track whose supported audio format is an audio format with a first specification from a plurality of audio tracks matching the language;
selecting an audio track having a first bit rate from the audio track whose supported audio format is the audio format with the first specification; and
playing the audio and video file based on the selected audio track, wherein the first specification of the supported audio format is higher than an second specification of the supported audio format;
the first bit rate of the audio track having the first bit rate is higher than a second bit rate of an audio track having the second bit rate;
the second specification refers to Dolby surround audio encoding AC-3; and
the second bit rate is 448 kilobytes per second.

6. The terminal according to claim 5, wherein the one or more computer programs comprise an instruction, and when the instruction is executed by the electronic device, the electronic device is enabled to perform the following step: determining, by the terminal, a first language evaluation result based on one or more of a system language, an input method setting, voice assistant input, and a historical movie watching habit.

7. The terminal according to claim 5, wherein the one or more computer programs comprise an instruction, and when the instruction is executed by the electronic device, the electronic device is enabled to perform the following step:
determining, by the terminal, a second language evaluation result based on one or more of an audio format and a bit rate.

8. The terminal according to claims 6 and 7, wherein the one or more computer programs comprise an instruction, and when the instruction is executed by the electronic device, the electronic device is enabled to perform the following step: determining a language of the played audio track based on the first language evaluation result and the second language evaluation result.

9. A computer program product comprising an instruction, wherein when the computer program product runs on a terminal, the electronic device is enabled to perform the method according to any one of claims 1 to 4.

10. A computer-readable storage medium, comprising an instruction, wherein when the instruction is run on a terminal, the electronic device is enabled to perform the method according to any one of claims 1 to 4.
